# EUROPEAN PATENT APPLICATION

(11) **EP 3 244 559 A1**
(43) Date of publication of application: **15.11.2017**
(21) Application number: 16748728.9
(22) Date of filing: 05.02.2016
(51) Int. Cl.: H04L 1/00

(54) **TRANSMISSION CONTROL METHOD AND APPARATUS FOR UPLINK DATA**

(30) Priority: 13.02.2015 CN 201510079329
(71) Applicant: ZTE Corporation, Shenzhen, Guangdong 518057 (CN)
(72) Inventor: SHI, Jing, Shenzhen Guangdong 518057 (CN); XIA, Shuqiang, Shenzhen Guangdong 518057 (CN); DAI, Bo, Shenzhen Guangdong 518057 (CN); DAI, Qian, Shenzhen Guangdong 518057 (CN); ZHANG, Wen, Shenzhen Guangdong 518057 (CN); LIU, Kun, Shenzhen Guangdong 518057 (CN)
(74) Representative: Savi, Massimiliano
(86) International application number: PCT/CN2016/073649
(87) International publication number: WO 2016/127927

(57) **Abstract**

A method of transmitting and controlling uplink data includes: a base station allocating shared resources for transmitting the uplink data to at least two terminals in a cell; and the base station configuring the at least two terminals to transmit the uplink data without grant on the shared resources.

## Description

### Technical Field

Embodiments of the present invention relates to the field of communication, and more particularly, to a method and apparatus of transmitting and controlling uplink data.

### Background

With the ever-increasing improvement and perfection of the 4th generation (4G) mobile communication technology long-term evolution (LTE)/long-term evolution advance (LTE-Advance/LTE-A) commercial systems, technical index requirements for the next generation mobile communication technology, i.e., the 5th generation (5G) mobile communication technology are also higher and higher. It is generally believed in the industry that transmission characteristics of the next generation mobile communication systems have features, such as ultra-high rate, ultra-high capacity, ultra-high reliability and ultra-low delay. The index of the ultra-low delay in the currently recognized 5G systems is air interface delay of about 1ms.

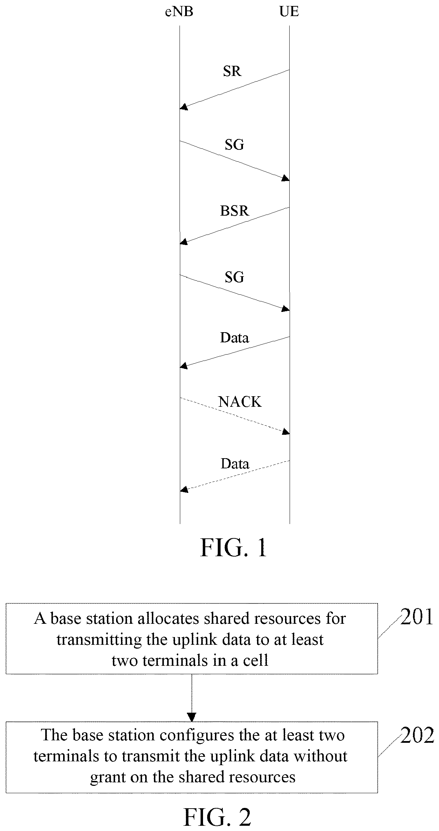

FIG. 1 is a schematic diagram of uplink data transmission interaction of an LTE system in the prior art. In the interaction diagram shown in FIG.1, when the LTE uplink data transmission is in a connected state, starting with sending of a schedule request (SR), uplink data is sent eventually through a series of schedule requests and grant. Firstly, user equipment (UE) request uplink resources from an E-UTRAN NodeB (ENB), and bear SR information through the Physical Uplink Control Channel (PUCCH). The ENB is only notified whether there are requirements for resources through the SR, but the ENB is notified how many resources are required specifically through further reporting of buffer state register (BSR) information. Then, the ENB sends a schedule grant (SG) to allocate resources and inform the UE that the SG is carried by the Physical Downlink Control Channel (PDCCH). The UE receives a notification of a resource allocation result, transmits the uplink data, and uses the Physical Uplink Shared Channel (PUSCH) to bear the uplink data. If thereafter there are data transmission errors, the UE further needs to retransmit the data.

It can be seen that steps of the existing process of transmitting uplink data are lengthy and tedious, and it is difficult to guarantee the requirement for the transmission characteristic of ultra-low delay in future 5G systems.

### Summary

The following is a summary of the subject matter described herein in detail. This summary is not intended to limit the protection scope of the claims.

An embodiment of the present invention provides a method of transmitting and controlling uplink data with respect to how to transmit and control the uplink data to satisfy the requirement for ultra-low delay.

The embodiment of the present invention provides the following technical scheme.

A method of transmitting and controlling uplink data includes: a base station allocating shared resources for transmitting the uplink data for at least two terminals in a cell; and the base station configuring the at least two terminals to transmit the uplink data without grant on the shared resources.

In an exemplary embodiment, the at least two terminals include terminals requiring low delay transmission.

In an exemplary embodiment, the shared resources contain temporary resources.

In an exemplary embodiment, the base station controls deactivation of the temporary resources by causing using time of the temporary resources to exceed preset usage limited time or using physical layer signaling or upper layer signaling to deactivate the temporary resources.

In an exemplary embodiment, the method further includes: the base station detecting the received uplink data carried by the shared resources; and if detecting that conflicts occur in the uplink data carried by the shared resources, the base station using the physical layer signaling to activate the temporary resources in the shared resources on the premise that a preset judgement condition is satisfied.

In an exemplary embodiment, the judgement condition includes any one of the following conditions: a ratio of the shared resources in which the conflicts occur to the total shared resources exceeds a preset ratio, and transmission delay exceeds a preset delay threshold; and the number of terminals using the shared resources exceeds a preset number threshold.

In an exemplary embodiment, when the shared resources contain the temporary resources, before the temporary resources are not activated by the base station or after the temporary resources are deactivated, the base station allows other terminals in the cell to use the temporary resources; when the shared resources do not contain the temporary resources, the base station allows all of the terminals requiring low delay transmission to use the shared resources to send the uplink data, and does not allow other terminals in the cell to use the shared resources.

In an exemplary embodiment, the base station configuring the at least two terminals to transmit the uplink data without grant on the shared resources include configuring the terminals requiring low delay transmission in the at least two terminals to use part or all of the shared resources to send the uplink data; or in the case that the at least two terminals include a first set of terminals and a second set of terminals, configuring terminals in the first set of terminals to use the temporary resources to send the uplink data and terminals in the second set of terminals to use the shared resources, which do not contain the temporary resources, to send the uplink data.

In an exemplary embodiment, configuring the terminals requiring low delay transmission in the at least two terminals to use part of the shared resources to send the uplink data includes: configuring the terminals requiring low delay transmission in the at least two terminals to use one of N portions obtained by dividing the shared resources to send the uplink data, wherein N is a positive integer number.

In an exemplary embodiment, the method further includes: the base station detecting the received uplink data carried by the shared resources; and if detecting that the conflicts occur in the uplink data carried by the shared resources, the base station completing management by any one of: 1) allocating dedicated resources to the at least two terminals and configuring the at least two terminals to use the allocated dedicated resources to transmit the uplink data, 2) increasing the size of the shared resources and configuring the at least two terminals to use the increased shared resources to transmit the uplink data, 3) decreasing the size of the shared resources and configuring the at least two terminals to use the decreased shared resources to transmit the uplink data, 4) in the case that the at least two terminals include a third set of terminals and a fourth set of terminals, allocating dedicated resources to terminals in the third set of terminals and configuring the terminals in the third set of terminals to use the allocated dedicated resources to transmit the uplink data, and increasing the size of the shared resources and configuring the terminals in the fourth set of terminals to use the increased shared resources to transmit the uplink data; and 5) in the case that the at least two terminals include a fifth set of terminals and a sixth set of terminals, allocating dedicated resources to terminals in the fifth set of terminals and configuring the terminals in the fifth set of terminals to use the allocated dedicated resources to transmit the uplink data, and decreasing the size of the shared resources and configuring the terminals in the sixth set of terminals to use the decreased shared resources to transmit the uplink data.

In an exemplary embodiment, the shared resources are located at one side of system bandwidth at which frequencies are lower than a center frequency or at one side of the system bandwidth at which frequencies are higher than the center frequency or at two sides of the system bandwidth or at a center of the system bandwidth.

In an exemplary embodiment, the temporary resources are not larger than the original shared resources and do not overlap with the original shared resources, the temporary resources being located at one side of the system bandwidth at which the frequencies are lower than the center frequency or at one side of the system bandwidth at which the frequencies are higher than the center frequency or at two sides of the system bandwidth or at the center of the system bandwidth.

A method of transmitting and controlling uplink data includes: terminals obtaining shared resources for transmitting the uplink data allocated by a base station to at least two terminals in a cell; and the terminals using the shared resources to transmit the uplink data without grant.

In an exemplary embodiment, the terminals using the shared resources to transmit the uplink data without grant includes: when the shared resources contain temporary resources, before the temporary resources are not activated or after usage limited time is exceeded after activation of the temporary resources, terminals requiring low delay transmission using only the shared resources except the temporary resources to send the uplink data.

In an exemplary embodiment, the terminals using the shared resources to transmit the uplink data without grant includes: the terminals requiring low delay transmission using the shared resources to send the uplink data, and selecting resource units in the shared resources to be occupied according to the size of the required transmitted data, or selecting all of the shared resources to be occupied.

In an exemplary embodiment, the terminals using the shared resources to transmit the uplink data without grant includes: the terminals selecting one of N portions obtained by dividing the shared resource according to identification information of the terminals and using the selected shared resources to transmit the uplink data without grant.

In an exemplary embodiment, the identification information of the terminals includes a user equipment identifier (UE-ID) or a cell radio network temporary identifier (C-RNTI).

An apparatus of transmitting and controlling uplink data includes: an allocation module configured to allocate shared resources for transmitting the uplink data for at least two terminals in a cell; and a configuration module configured to configure the at least two terminals to transmit the uplink data without grant on the shared resources.

In an exemplary embodiment, the at least two terminals include terminals requiring low delay transmission.

In an exemplary embodiment, the shared resources contain temporary resources.

In an exemplary embodiment, the apparatus further includes a deactivation module configured to control deactivation of the temporary resources by causing using time of the temporary resources to exceed preset usage limited time or using physical layer signaling or upper layer signaling to deactivate the temporary resources.

In an exemplary embodiment, the apparatus further includes a first detection module configured to detect the received uplink data carried by the shared resources, and an activation module configured to, if detecting that conflicts occur in the uplink data carried by the shared resources, use the physical layer signaling to activate the temporary resources in the shared resources on the premise that a preset judgement condition is satisfied.

In an exemplary embodiment, the judgement condition includes any one of the following conditions: a ratio of the shared resources in which the conflicts occur to the total shared resources exceeds a preset ratio, and transmission delay exceeds a preset delay threshold; and the number of terminals using the shared resources exceeds a preset number threshold.

In an exemplary embodiment, the apparatus further includes: a first control module configured to, when the shared resources contain the temporary resources, before the temporary resources are not activated by the base station or after the temporary resources are deactivated, allow other terminals in the cell to use the temporary resources, or a second control module configured to, when the shared resources do not contain the temporary resources, allow all of the terminals requiring low delay transmission to use the shared resources to send the uplink data, and not allow other terminals in the cell to use the shared resources.

In an exemplary embodiment, the configuration module is configured to configure the terminals requiring low delay transmission in the at least two terminals to use part or all of the shared resources to send the uplink data, or divide the at least two terminals into a first set of terminals and a second set of terminals, and configure terminals in the first set of terminals to use the temporary resources to send the uplink data and terminals in the second set of terminals to use the shared resources, which do not contain the temporary resources, to send the uplink data.

In an exemplary embodiment, the configuration module is configured to configure the terminals requiring low delay transmission in the at least two terminals to use one of N portions obtained by dividing the shared resources to send the uplink data, wherein N is a positive integer number.

In an exemplary embodiment, the apparatus further includes: a second detection module configured to detect the received uplink data carried by the shared resources, and a management module configured to, if detecting that the conflicts occur in the uplink data carried by the shared resources, complete management by any one of: 1) allocating dedicated resources to the at least two terminals and configuring the at least two terminals to use the allocated dedicated resources to transmit the uplink data, 2) increasing the size of the shared resources and configuring the at least two terminals to use the increased shared resources to transmit the uplink data, 3) decreasing the size of the shared resources and configuring the at least two terminals to use the decreased shared resources to transmit the uplink data, 4) dividing the at least two terminals into a third set of terminals and a fourth set of terminals, allocating dedicated resources to terminals in the third set of terminals and configuring the terminals in the third set of terminals to use the allocated dedicated resources to transmit the uplink data, and increasing the size of the shared resources and configuring the terminals in the fourth set of terminals to use the increased shared resources to transmit the uplink data; and 5) dividing the at least two terminals into a fifth set of terminals and a sixth set of terminals, allocating dedicated resources to terminals in the fifth set of terminals and configuring the terminals in the fifth set of terminals to use the allocated dedicated resources to transmit the uplink data, and decreasing the size of the shared resources and configuring the terminals in the sixth set of terminals to use the decreased shared resources to transmit the uplink data.

In an exemplary embodiment, the shared resources are located at one side of system bandwidth at which frequencies are lower than a center frequency or at one side of the system bandwidth at which frequencies are higher than the center frequency or at two sides of the system bandwidth or at a center of the system bandwidth.

In an exemplary embodiment, the temporary resources are not larger than the original shared resources and do not overlap with the original shared resources, the temporary resources being located at one side of the system bandwidth at which the frequencies are lower than the center frequency or at one side of the system bandwidth at which the frequencies are higher than the center frequency or at two sides of the system bandwidth or at the center of the system bandwidth.

An apparatus of transmitting and controlling uplink data includes: an obtaining module configured to obtain shared resources for transmitting the uplink data allocated by a base station to at least two terminals in a cell, and a transmission module configured to use the shared resources to transmit the uplink data without grant.

In an exemplary embodiment, the transmission module is configured to, when the shared resources contain temporary resources, before the temporary resources are not activated or after usage limited time is exceeded after activation of the temporary resources, use only the shared resources except the temporary resources to send the uplink data.

In an exemplary embodiment, the transmission module is configured to use the shared resources to send the uplink data, and select resource units in the shared resources to be occupied according to the size of the required transmitted data, or select all of the shared resources to be occupied.

In an exemplary embodiment, the transmission module is configured to select one of N portions divided in the shared resource according to identification information of the terminals and use the selected shared resources to transmit the uplink data without grant.

In an exemplary embodiment, the identification information of the terminals includes a user equipment identifier (UE-ID) or a cell radio network temporary identifier (C-RNTI).

The embodiments of the present invention can solve the problem of larger delay when the terminals use the traditional scheduling mode in the connected state so as to decrease the delay when the terminals transmit the uplink data, ensure that the terminals transmit the uplink data fast and satisfy the communication requirements of the terminals requiring low delay transmission in the system.

After the accompanying drawings and detailed description are read and understood, other aspects can be understood.

### Brief Description of Drawings

FIG. 1 is a schematic diagram of uplink data transmission interaction of an LTE system in the prior art.
FIG. 2 is a flow chart of a method for transmitting and controlling uplink data in accordance with an embodiment of the present invention;
FIG. 3 is a flow chart of another method for transmitting and controlling uplink data in accordance with an embodiment of the present invention;
FIG. 4 is a schematic diagram of shared resources allocated by a base station in accordance with an embodiment of the present invention;
FIG. 5 is a flow chart of a process of allocating dedicated resources in a scheduling mode for data transmission after data conflicts occur in accordance with an embodiment of the present invention;
FIG. 6 is a flow chart of a process in which each of UE still transmits data without grant on the shared resources after data conflicts occur in accordance with an embodiment of the present invention;
FIG. 7 is flow chart of a process in which part of terminals use the allocated dedicated resources to transmit uplink data and part of the terminals use enlarged shared resource regions to transmit the uplink data without grant after data conflicts occur in accordance with an embodiment of the present invention;
FIG. 8 is a block diagram of an apparatus for transmitting and controlling uplink data in accordance with an embodiment of the present invention; and
FIG. 9 is a block diagram of another apparatus for transmitting and controlling uplink data in accordance with an embodiment of the present invention.

### Detailed Description

Embodiments of the present invention will be described in detail in conjunction with the accompanying drawings. It is should be noted that the embodiments in the present application and features in the embodiments can be combined with each other arbitrarily without conflict.

FIG. 2 is a flow chart of a method for transmitting and controlling uplink data in accordance with an embodiment of the present invention. As shown in FIG. 2, the method includes the following steps 201-202.

In step 201: a base station allocates shared resources for transmitting the uplink data to at least two terminals in a cell.

In step 202: the base station configures the at least two terminals to transmit the uplink data without grant on the shared resources. Here, the autonomous transmission refers to a transmission mode in which dedicated resources scheduled and allocated by the base station dynamically are not used and transmission of the uplink data is completed without grant by using the shared resources, without being subject to instruction of dynamic scheduling control signaling of the base station.

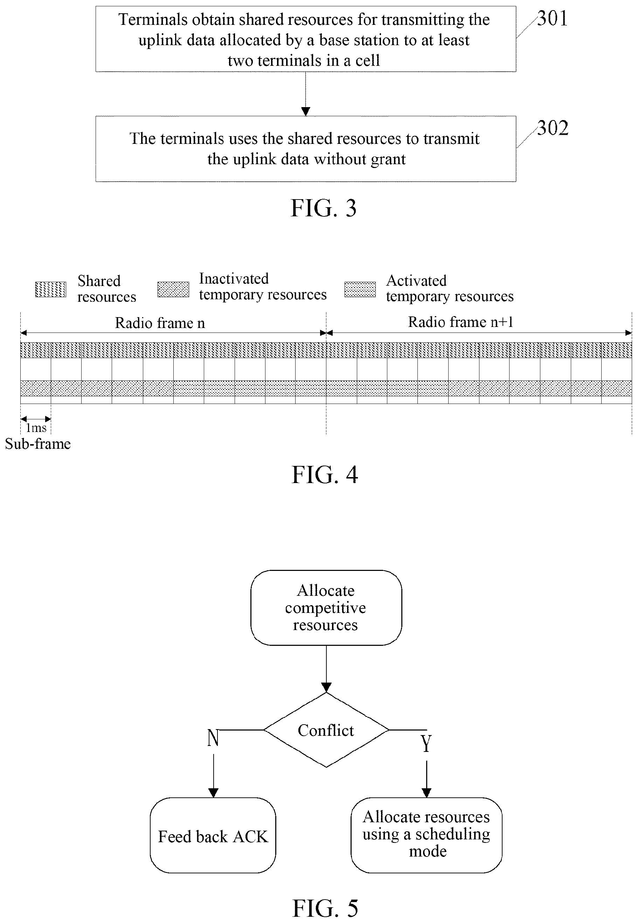

FIG. 3 is a flow chart of another method for transmitting and controlling uplink data in accordance with an embodiment of the present invention. As shown in FIG. 3, the method includes the following steps 301-302.

In step 301: terminals obtain shared resources for transmitting the uplink data allocated by a base station to at least two terminals in a cell.

In step 302: the terminals use the shared resources to transmit the uplink data without grant.

The methods in accordance with the embodiments of the present invention can solve the problem of larger delay when the terminals use the traditional scheduling mode in the connected state so as to decrease the delay when the terminals transmit the uplink data, ensure that the terminals transmit the uplink data fast and satisfy the communication requirements of the terminals requiring low delay transmission in the system.

In the methods described above, in an exemplary embodiment, the at least two terminals include terminals requiring low delay transmission. In an exemplary embodiment, the base station allocates the shared resources for transmitting the uplink data to all the terminals or a group of terminals in the cell, and each of the terminals transmit the uplink data without grant on the shared resources.

In an exemplary embodiment, the base station allocates the shared resources for transmitting the uplink data to all the terminals in the cell using control channel scheduling system information block (SIB) information of a control channel scheduling system scrambled by a system information-radio network temporary identifier (SI-RNTI); and the base station allocates the shared resources for transmitting the uplink data to the group of terminals in the cell using control channel scheduling group information or SIB information scrambled by a group radio network temporary identifier (G-RNTI) or SI-RNTI.

In an exemplary embodiment, when the shared resources contain the temporary resources, before the temporary resources are not activated or after usage limited time is exceeded after activation of the temporary resources, terminals requiring low delay transmission use only the shared resources except the temporary resources to send the uplink data. The temporary resources refer to standby resources in the shared resources, and they are also shared resources, but need to be activated when used.

In an exemplary embodiment, when the shared resources contain the temporary resources, before the temporary resources are not activated by the base station or after the temporary resources are deactivated, the base station allows other terminals in the cell to use the temporary resources.

In an exemplary embodiment, the base station controls the deactivation of the temporary resources by:
the using time of the temporary resources exceeding preset usage limited time; or
using a physical layer signaling or upper layer signaling to deactivate the temporary resources.

FIG. 4 is a schematic diagram of shared resources allocated by a base station in accordance with an embodiment of the present invention. In the schematic diagram shown in FIG. 4, before the temporary resources are not activated or after the usage limited time is exceeded after activation of the temporary resources, for common terminals, there is no difference between the temporary resources and other available resources and the temporary resources can be used normally. However, for terminals which transmit the uplink data without grant on the shared resource regions, the temporary resources are not the shared resources and cannot be used. The limited time is a fixed value, for example, 1ms, 10ms, etc. In addition, the base station can use a physical layer signaling or upper layer signaling to deactivate the temporary resources, such that the temporary resources become invalid. The physical layer signaling downlink control information (DCI) contains at least 1 bit information for deactivating the temporary resources. The upper layer signaling is carried in the SIB or radio resource control (RRC) signaling.

The base station detects the received uplink data carried by the shared resources; and if detecting that conflicts occur in the uplink data carried by the shared resources, the base station uses the physical layer signaling to activate the temporary resources in the shared resources on the premise that a preset judgement condition is satisfied.

Specifically, after the base station allocates the shared resources, the terminals requiring low delay transmission transmit the uplink data on the shared resource regions and conflicts occur, at which point in order to guarantee delay requirements, re-allocating the shared resources will generate the larger delay, and therefore, the base station will use the physical layer signaling to activate the temporary resource for all or part of the terminals. Thereafter, the terminals receiving this physical layer signaling may use only the temporary resources or both the temporary and the original shared resources to retransmit the uplink data. The physical layer signaling DCI contains at least the 1 bit information for activating the temporary resources.

The preset judgement condition includes any one of the following conditions: a ratio of the shared resources in which the conflicts occur to the total shared resources exceeds a preset ratio, and transmission delay exceeds a preset delay threshold; and the number of terminals using the shared resources exceeds a preset number threshold.

For example, when the shared resources account for 30% of the total uplink data resources and conflicting resources account for over 80% the total shared resources (i.e., the conflicting resources account for 24% of the total uplink data resources), the temporary resources need to be activated. For services with different delay requirements, threshold values Y of timers/delay requirements are different, and they may be of the level of magnitude of nanosecond (ns) or microsecond (µs) or millisecond (ms); for the services with different delay requirements, threshold values Z of the number of the terminals are different, and may be dozens, hundreds, thousands and tens of thousands.

The terminals requiring low delay transmission will use part or all of the shared resources to send the uplink data. Or according to different types of the terminals, part of the terminals (a first set of terminals) use the temporary resources, while part of the terminals (a second set of terminals) use the original shared resources which do not contain the temporary resources. When using part of the shared resources, the terminals preferably select one of N portions obtained by dividing the shared resources according to a UE-ID or C-RNTI or other identification information which may distinguish terminals. For example, the shared resources are divided into N=10 portions, the terminals determine which portion of the N portions will be used according to (UE-ID) mod (N), or the terminals determine which portion of the N portions will be used according to (C-RNTI) mod (N).

In an exemplary embodiment, when the shared resources do not contain the temporary resources, the base station allows all of the terminals requiring low delay transmission to use the shared resources to send the uplink data, and not allow other terminals in the cell to use the shared resources.

In an exemplary embodiment, the base station detects and receives in the shared resource regions the uplink data sent by the terminals requiring low delay transmission. After the base station detects data conflicts, operations will be performed in one of the following manners.

Manner 1: the base station allocates dedicated resources to the at least two terminals and configure the at least two terminals to use the allocated dedicated resources to transmit the uplink data.

FIG. 5 is a flow chart of a process of allocating dedicated resources in a scheduling mode for data transmission after data conflicts occur in accordance with an embodiment of the present invention. The method shown in FIG. 5 is used for services in which the conflict situations are not serious or the delay requirements are extremely high. That is, the situation applied to this method is that the resources are abundant and the dedicated resources can be allocated for retransmission, or the resources are not abundant but the delay requirements are extremely high, and the delay requirements must be guaranteed, so the dedicated resources are allocated with a high priority for retransmission.

Manner 2: the base station increases the size of the shared resources and configures the at least two terminals to use the increased shared resources to transmit the uplink data.

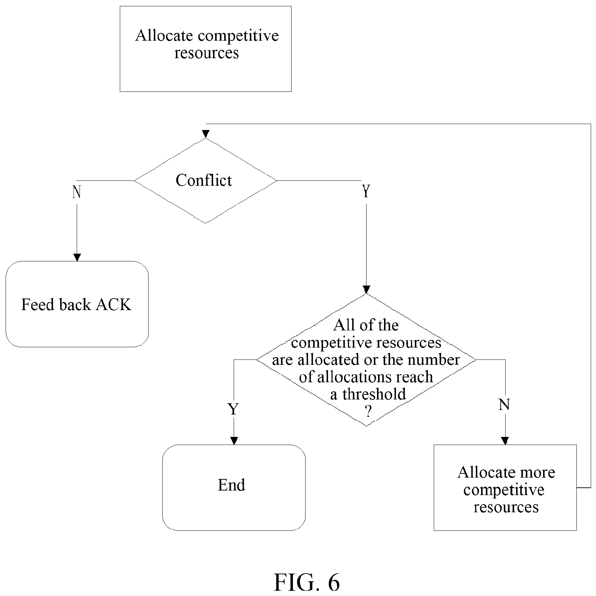

FIG. 6 is a flow chart of a process in which each of UE still transmits data without grant on the shared resources after data conflicts occur in accordance with an embodiment of the present invention. In the flow chart shown in FIG. 6, an eNB adjusts the size of the shared resources on a sub-frame n+k based on the collision detection for the shared resources on a sub-frame n. After the conflicts occur, each of the UE still transmits data without grant on the shared resources.

Specifically, the eNB adjusts the size of the shared resources on the sub-frame n+k based on collision detection for the shared resources on the sub-frame n. If it is detected that the data is transmitted and collision probability is large for all physical resource blocks (PRBs) of the shared resources on the sub-frame n, then the collision probability is converted into a shared resource adjustment factor r and PRB resources on the sub-frame n+k are allocated. Assuming that M PRB resources are allocated on the sub-frame n for autonomous transmission, then (1+r) x M PRB resources will be allocated on the sub-frame n+k, at which point r>0. If it is detected that part of the PRBs in the shared resources on the sub-frame n are not used by low delay UE and there is no collision in the used PRB resources, then (1+r) x M PRB resources will be allocated on the sub-frame n+k, at which point r<0. In an exemplary embodiment, values of M may be assigned according to the delay requirements of the services.

In the method shown in FIG. 6, the shared resources are still allocated after the conflicts occur, and then each of the UE retransmits the data without grant. This method is applied to the case in which the conflicts are serious. In this method, the shared resources are increased on the sub-frame n+k for autonomous retransmission. At this point, the dedicated resources cannot satisfy the large number of low delay UE. Increasing and allocating the shared resources again needs a certain limitation. For example, if the conflicts still occur when the shared resources account for 80% of the total resources or when all the resources are used as the shared resources, then the transmission of the uplink data in the autonomous transmission mode will be terminated; or when the number of allocations of the shared resources reaches a threshold for N times, then the transmission of the uplink data in the autonomous transmission mode will be terminated.

Manner 3: the base station decreases the size of the shared resources and configures the at least two terminals to use the decreased shared resources to transmit the uplink data.

Specifically, when the eNB detects that the utilization ratio of the shared resources is lower than a utilization ratio threshold, then it is determined that the shared resources are too large, causing waste of the resources, and the size of the current shared resources can be decreased according to the size of the shared resources used actually by the at least two terminals in the cell.

Manner 4: in the case that the at least two terminals include a third set of terminals and a fourth set of terminals, the base station allocates dedicated resources to terminals in the third set of terminals and configures the terminals in the third set of terminals to use the allocated dedicated resources to transmit the uplink data, and the base station increases the size of the shared resources and configures the terminals in the fourth set of terminals to use the increased shared resources to transmit the uplink data.

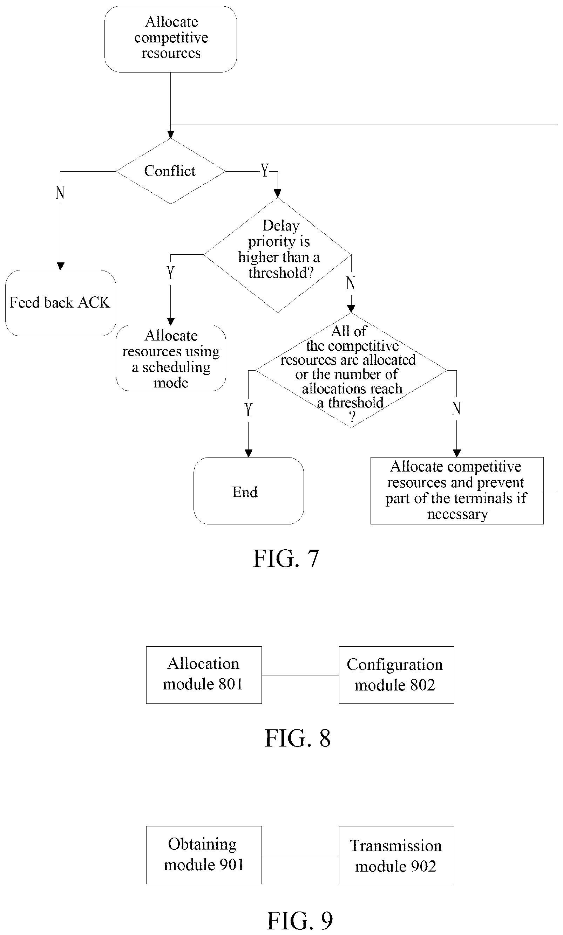

FIG. 7 is a flow chart of a process in which part of terminals use the allocated dedicated resources to transmit uplink data and part of the terminals use enlarged shared resource regions to transmit the uplink data without grant after data conflicts occur in accordance with an embodiment of the present invention. In the process shown in FIG. 7, the part of the terminals use the allocated dedicated resources to transmit the uplink data and they are high-priority terminals. Such terminals include at least terminals with a high requirement for delay; or when the delay approaches or exceeds an intolerable threshold after many conflicts, the dedicated resources are used for scheduling transmission. Part of the terminals use the enlarged shared resource regions to transmit the uplink data without grant, and since the resources are not sufficient, other terminals, such as low-priority terminals or terminals with a lower requirement for delay, still need to continue to use the shared resources in the subsequent sub-frames for competitive transmission (i.e., compete for the resources for transmission). However, in order to avoid the result of failure of the previous competitive transmission, part of the terminals may be prevented to send the uplink data, for example, the terminals with low delay priority or the terminals, delay tolerance of which is a certain distance away from a threshold, may be prevented to send the uplink data.

Manner 5: in the case that the at least two terminals include a fifth set of terminals and a sixth set of terminals, the base station allocates dedicated resources to terminals in the fifth set of terminals and configures the terminals in the fifth set of terminals to use the allocated dedicated resources to transmit the uplink data, and the base station decreases the size of the shared resources and configures the terminals in the sixth set of terminals to use the decreased shared resources to transmit the uplink data.

Specifically, when the eNB detects that the utilization ratio of the shared resources is lower than a utilization ratio threshold, then it is determined that the shared resources are too large, causing waste of the resources, and the size of the current shared resources can be decreased according to the size of the shared resources used actually by the at least two terminals in the cell.

The terminals requiring low delay transmission use the shared resources to send the uplink data, and they select corresponding resource units in the shared resources to be occupied according to the size of the required transmission data or select all of the shared resources to be occupied.

The shared resources are, in an exemplary embodiment, located at one side of system bandwidth at which frequencies are lower or at two sides of the system bandwidth or at a center of the system bandwidth. For example, the system bandwidth is 20MHz, the number of available frequency domain PRBs is 100 in total. In an exemplary embodiment, the shared resources are located in positions where the serial numbers of the PRBs are smaller, for example, the shared resources contain 20 PRBs, PRB0-19; or in an exemplary embodiment, the shared resources are located in positions where the serial numbers of the PRBs are smaller and larger, i.e., frequency domain resources at the two sides of the system bandwidth, for example, the shared resources contain 40 PRBs, PRB0-19 and PRB80-99; or in an exemplary embodiment, the shared resources are located at the center of the system bandwidth, for example, the shared resources contain 20 PRBs, PRB40-59.

The temporary resources are not larger than the original shared resources and do not overlap with the original shared resources, and the temporary resources are, in an exemplary embodiment, located at one side of the system bandwidth at which the frequencies are lower or at two sides of the system bandwidth or at the center of the system bandwidth. For example, the system bandwidth is 20MHz, the number of available frequency domain PRBs is 100 in total. In an exemplary embodiment, the shared resources are located in positions where the serial numbers of the PRBs are smaller, for example, the temporary resources contain 10 PRBs, PRB30-39; or in an exemplary embodiment, the temporary resources are located in positions where the serial numbers of the PRBs are smaller and larger, i.e., frequency domain resources at the two sides of the system bandwidth, for example, the temporary resources contain 20 PRBs, PRB30-39 and PRB60-69; or in an exemplary embodiment, the temporary resources are located at the center of the system bandwidth, for example, the shared resources contain 10 PRBs, PRB30-39.

In an exemplary embodiment, when the terminals requiring low delay transmission use the shared resources to send the uplink data, they select some resource units, such as 1, 2, 4, or 8 PRBs, to be occupied, or select all the shared resources to be occupied and used different spread spectrum codes or orthogonal codes.

In an exemplary embodiment, the at least two terminals may be divided into at least two sets of terminals, such as a first set of terminals and a second set of terminals, or a third set of terminals and a fourth set of terminals, or a fifth set of terminals and a sixth set of terminals. The sets of terminals may be formed randomly or may be determined according to different delay requirements, wherein the different delay requirements mean that different delay tolerances, for example, delay tolerances of 1ms and 10m are different delay tolerances.

### Example 1

In this example, a method of transmitting uplink data information will be described by way of example.

A base station allocates shared resources for transmitting the uplink data information to a group of terminals requiring low delay transmission in a cell using control channel scheduling group information scrambled by a G-RNTI. The allocated shared resources account for 30% of the total resources and are located in frequency domain positions in the system bandwidth of which serial numbers are lower, at which point the shared resources contain temporary resources and the temporary resources account for 50% of the shared resources.

After the base station allocates the shared resource, the terminals requiring low delay transmission transmit the uplink data without grant in the shared resource regions, terminals 1-10 all send the uplink data on a sub-frame n, and select 1, 2, 4 or 8 PRBs according to the size of respective data packet using different frequency domain resource units. The base station receives the data in the shared resource regions and detects that collision conflicts occur in 80% of the resources in the shared resource regions, and confirms through identification information of each UE that the serial numbers of the terminals are 4-10, and collision occurs in all or part of their uplink data information.

At this point, the delay priorities of the terminals 1-10 are all higher, in order to guarantee delay requirements, re-allocating the shared resources will generate the larger delay, and therefore, the physical layer signaling will be used on a sub-frame n+1 to activate the temporary resources for the group of terminals. The physical layer signaling DCI contains at least 1 bit information for activating the temporary resources, and the using time of the temporary resources after the activation will be a fixed value 10ms. Thereafter, the terminals receiving the physical layer signaling may use both the temporary and the original shared resources to re-transmit the uplink data on a sub-frame n+2.

In this example, a section of shared resources containing the temporary resources in the system bandwidth is selected for the terminals requiring low delay transmission to transmit the uplink data without grant so as to guarantee shortest delay requirements when there is no resource conflict and guarantee shorter delay requirements by using the temporary resources when conflicts occur. The example is applied to low delay communication scenarios.

### Example 2

In this example, a method of transmitting uplink data information will be described by way of example.

A base station allocates shared resources for transmitting the uplink data information to all terminals requiring low delay transmission in a cell using control channel scheduling system information scrambled by a SI-RNTI. The allocated shared resources account for 30% of the total resources and are located in frequency domain positions in the system bandwidth of which serial numbers are lower.

After the base station allocates the shared resource, the terminals requiring low delay transmission transmit the uplink data without grant in the shared resource regions, part of terminals 1-100 send the uplink data on a sub-frame n, and select 1, 2, 4 or 8 PRBs according to the size of respective data packet using different frequency domain resource units. The base station receives the data in the shared resource regions and detects that collision conflicts occur in 80% of the resources in the shared resource regions, and confirms, through identification information of each UE, the serial numbers of the terminals, and that the number of the terminals is 30, and collision occurs in all or part of their uplink data information.

The uplink data is retransmitted without grant using the increased shared resources on the sub-frame n+k after the conflicts occur, k=10. The eNB adjusts the size of the shared resources on the sub-frame n+k based on the collision detection for the shared resources on the sub-frame n. if it is detected that the data is transmitted and collision probability is 80% for all PRBs of the shared resources on the sub-frame n, then the collision probability is converted into a shared resource adjustment factor r and PRB resources on the sub-frame n+k are allocated, r=0.8. If PRB resources (M PRBs) accounting for 30% of the total resources allocated on the sub-frame n are used for autonomous transmission, then (1+r) x M PRB resources will be allocated on the sub-frame n+k, i.e., PRBs accounting for 54% of the total resources will be allocated.

If the conflicts still occur in autonomous transmission on the sub-frame n+k on the increased shared resources, then the increased shared resources continue to be allocated. When a limitation condition is reached, for example, when the shared resources account for 80% of the total resources, then the transmission of the uplink data in the autonomous transmission mode will be terminated.

In this example, a section of shared resources in the system bandwidth is selected for the terminals requiring low delay transmission to transmit the uplink data without grant so as to guarantee shortest delay requirements when there is no resource conflict and guarantee shorter delay requirements by increasing the shared resources when conflicts occur. The example is applied to low delay communication scenarios.

### Example 3

In this example, a method of transmitting uplink data information will be described by way of example.

A base station allocates shared resources for transmitting the uplink data information to all terminals requiring low delay transmission in a cell using control channel scheduling system information scrambled by a SI-RNTI. The allocated shared resources account for 40% of the total resources and are located in frequency domain positions in the system bandwidth of which serial numbers are lower.

After the base station allocates the shared resource, the terminals requiring low delay transmission transmit the uplink data without grant in the shared resource regions, part of terminals 1-100 send the uplink data on a sub-frame n, and select 1, 2, 4 or 8 PRBs according to the size of respective data packet using different frequency domain resource units. The base station receives the data in the shared resource regions and detects that collision conflicts occur in 80% of the resources in the shared resource regions, and confirms, through identification information of each UE, the serial numbers of the terminals, and that the number of the terminals is 30, and collision occurs in all or part of their uplink data information.

The uplink data is retransmitted without grant using the same shared resources on the sub-frame n+k after the conflicts occur, k=10. The eNB limits the autonomous transmission on the shared resources by part of the terminals on the sub-frame n+k, based on collision detection for the shared resources on the sub-frame n. For example, the eNB detects that the data is transmitted and collision probability is r for all PRBs of the shared resources on the sub-frame n, and determines the delay priority for the detected collision terminals according to their service type. In conjunction with the collision probability, 30*r users with lower delay priority are limited not to transmit the data without grant on the sub-frame n+k and transmit the data without grant on a sub-frame n+k+1 and its subsequent sub-frames. 30*(1-r) users with higher delay priority are assigned preferentially to transmit the data without grant on the sub-frame n+k, and the shared resources used for the autonomous transmission keep unchanged.

If conflicts still occur in the autonomous transmission on the sub-frame n+k when the number of users is limited, then the number of users transmitting the data without grant continues to be limited thereafter according to delay priority of the collision users. If the delay has approached a threshold, then the shared resources can be increased such that the users approaching the delay threshold transmit the data without grant on the increased shared resources, or the transmission of the uplink data in the autonomous transmission mode by part of the terminals can be terminated without increasing the shared resources.

In this example, a section of shared resources in the system bandwidth is selected for the terminals requiring low delay transmission to transmit the uplink data without grant so as to guarantee shortest delay requirements when there is no resource conflict and guarantee shorter delay requirements of user with higher delay priority by limiting the users with lower delay priority and then transmitting the data when conflicts occur. The example is applied to low delay communication scenarios.

FIG. 8 is a block diagram of an apparatus for transmitting and controlling uplink data in accordance with an embodiment of the present invention. The embodiment shown in FIG. 8 includes the following modules.

An allocation module 501 is configured to allocate shared resources for transmitting the uplink data to at least two terminals in a cell.

A configuration module 802 is configured to configure the at least two terminals to transmit the uplink data without grant on the shared resources.

In an exemplary embodiment, the at least two terminals include terminals requiring low delay transmission.

In an exemplary embodiment, the shared resources contain temporary resources.

In an exemplary embodiment, the apparatus further includes a deactivation module configured to control deactivation of the temporary resources by causing using time of the temporary resources to exceed preset usage limited time or using a physical layer signaling or upper layer signaling to deactivate the temporary resources.

In an exemplary embodiment, the apparatus further includes the following modules.

A first detection module is configured to detect the received uplink data carried by the shared resources.

An activation module is configured to, if detecting that conflicts occur in the uplink data carried by the shared resources, use the physical layer signaling to activate the temporary resources in the shared resources on the premise that a preset judgement condition is satisfied.

In an exemplary embodiment, the judgement condition includes any one of the following conditions: a ratio of the shared resources in which the conflicts occur to the total shared resources exceeds a preset ratio, and transmission delay exceeds a preset delay threshold; and the number of terminals using the shared resources exceeds a preset number threshold.

In an exemplary embodiment, the apparatus further includes:
a first control module configured to, when the shared resources contain the temporary resources, before the temporary resources are not activated by the base station or after the temporary resources are deactivated, allow other terminals in the cell to use the temporary resources; or
a second control module configured to, when the shared resources do not contain the temporary resources, allow all of the terminals requiring low delay transmission to use the shared resources to send the uplink data, and not allow other terminals in the cell to use the shared resources.

In an exemplary embodiment, the configuration module is configured to:
configure the terminals requiring low delay transmission in the at least two terminals to use part or all of the shared resources to send the uplink data; or
divide the at least two terminals into a first set of terminals and a second set of terminals, and configure terminals in the first set of terminals to use the temporary resources to send the uplink data and terminals in the second set of terminals to use the shared resources, which do not contain the temporary resources, to send the uplink data.

In an exemplary embodiment, the configuration module is configured to:
configure the terminals requiring low delay transmission in the at least two terminals to use one of N portions obtained by dividing the shared resources to send the uplink data, wherein N is a positive integer number.

In an exemplary embodiment, the apparatus further includes the following modules.

A second detection module is configured to detect the received uplink data carried by the shared resources.

A management module is configured to, if detecting that the conflicts occur in the uplink data carried by the shared resources, complete management by any one of:
1) allocating dedicated resources to the at least two terminals and configuring the at least two terminals to use the allocated dedicated resources to transmit the uplink data;
2) increasing the size of the shared resources and configuring the at least two terminals to use the increased shared resources to transmit the uplink data;
3) decreasing the size of the shared resources and configuring the at least two terminals to use the decreased shared resources to transmit the uplink data;
4) dividing the at least two terminals into a third set of terminals and a fourth set of terminals, allocating dedicated resources to terminals in the third set of terminals and configuring the terminals in the third set of terminals to use the allocated dedicated resources to transmit the uplink data, and increasing the size of the shared resources and configuring the terminals in the fourth set of terminals to use the increased shared resources to transmit the uplink data; and
5) dividing the at least two terminals into a fifth set of terminals and a sixth set of terminals, allocating dedicated resources to terminals in the fifth set of terminals and configuring the terminals in the fifth set of terminals to use the allocated dedicated resources to transmit the uplink data, and decreasing the size of the shared resources and configuring the terminals in the sixth set of terminals to use the decreased shared resources to transmit the uplink data.

In an exemplary embodiment, the shared resources are located at one side of system bandwidth at which frequencies are lower than a center frequency or at one side of the system bandwidth at which frequencies are higher than the center frequency or at two sides of the system bandwidth or at a center of the system bandwidth.

In an exemplary embodiment, the temporary resources are not larger than the original shared resources and do not overlap with the original shared resources, the temporary resources being located at one side of the system bandwidth at which the frequencies are lower than the center frequency or at one side of the system bandwidth at which the frequencies are higher than the center frequency or at two sides of the system bandwidth or at the center of the system bandwidth.

In an exemplary embodiment, the apparatus is provided on a base station, which may be an eNB.

The apparatus in accordance with the embodiment of the present invention can solve the problem of larger delay when the terminals use the traditional scheduling mode in the connected state so as to decrease the delay when the terminals transmit the uplink data, ensure that the terminals transmit the uplink data fast and satisfy the communication requirements of the terminals requiring low delay transmission in the system.

FIG. 9 is a block diagram of another apparatus for transmitting and controlling uplink data in accordance with an embodiment of the present invention. The apparatus shown in FIG. 9 includes the following modules.

An obtaining module 901 is configured to obtain shared resources for transmitting the uplink data allocated by a base station to at least two terminals in a cell.

A transmission module 902 is configured to use the shared resources to transmit the uplink data without grant.

The transmission module 902 is configured to,
when the shared resources contain temporary resources, before the temporary resources are not activated or after usage limited time is exceeded after activation of the temporary resources, use only the shared resources except the temporary resources to send the uplink data.

The transmission module 902 is configured to:
use the shared resources to send the uplink data, and select resource units in the shared resources to be occupied according to the size of the required transmitted data, or select all of the shared resources to be occupied.

The transmission module 902 is configured to:
select one of N portions divided in the shared resource according to identification information of the terminals and use the selected shared resources to transmit the uplink data without grant.

The identification information of the terminals includes a user equipment identifier (UE-ID) or a cell radio network temporary identifier (C-RNTI).

In an exemplary embodiment, the apparatus is provided on a terminal, which may be a mobile terminal.

The apparatus in accordance with the embodiment of the present invention can solve the problem of larger delay when the terminals use the traditional scheduling mode in the connected state so as to decrease the delay when the terminals transmit the uplink data, ensure that the terminals transmit the uplink data fast and satisfy the communication requirements of the terminals requiring low delay transmission in the system.

People having ordinary skill in the art may understand that all or part of steps in the embodiments described above can be carried out using computer programs, which can be stored in a computer readable storage medium. The computer programs, when executed on the corresponding hardware platform (such as system, device, apparatus, equipment and processor), include one or a combination of steps in the method embodiments.

Optionally, all or part of steps in the embodiments described above can be carried out using integrated circuits. These steps can be implemented by making integrated circuit modules one by one or by making a plurality of modules thereof into a single integrated circuit module. Thus, the present invention is not limited to the combination of any specific form of hardware and software.

Various apparatuses/functional modules/functional units in the embodiments described above, which can be implemented by using general computing apparatuses, and they can be centralized on a single computing apparatus or distributed across a network formed from multiple computing apparatuses.

Various apparatuses/functional modules/functional units in the embodiments described above, when implemented in a form of software functional module and sold or used as stand-stone products, can be stored in a computer readable storage medium. The computer readable storage medium mentioned above may be a read-only memory, a magnetic disk or an optical disk, etc.

The above are specific embodiments of the present invention only, but the protect scope of the present invention is not limited thereto. Any variation or substitution which may occur easily to any person skilled in the art within the technical scope disclosed by the present invention should be covered within the protect scope of the present invention. Therefore, the protection scope of the present invention should be subject to the protection scope defined by the claims.

### Industrial Applicability

The embodiments of the present invention can solve the problem of larger delay when the terminals use the traditional scheduling mode in the connected state so as to decrease the delay when the terminals transmit the uplink data, ensure that the terminals transmit the uplink data fast and satisfy the communication requirements of the terminals requiring low delay transmission in the system.

## Claims

1. A method of transmitting and controlling uplink data comprising:
allocating, by a base station, shared resources for transmitting the uplink data for at least two terminals in a cell; and
configuring, by the base station, the at least two terminals to transmit the uplink data without grant on the shared resources.

2. The method according to claim 1, wherein the at least two terminals comprise terminals requiring low delay transmission.

3. The method according to claim 1, wherein the shared resources contain temporary resources.

4. The method according to claim 3, wherein the base station controls deactivation of the temporary resources by:
using time of the temporary resources exceeding preset usage limited time; or
using, by the base station, a physical layer signaling or upper layer signaling to deactivate the temporary resources.

5. The method according to claim 3, further comprising:
detecting, by the base station, the received uplink data carried by the shared resources; and
if detecting that conflicts occur in the uplink data carried by the shared resources, using, by the base station, the physical layer signaling to activate the temporary resources in the shared resources on the premise that a preset judgement condition is satisfied.

6. The method according to claim 5, wherein the judgement condition comprises any one of the following conditions: a ratio of the shared resources in which the conflicts occur to total shared resources exceeds a preset ratio; and transmission delay exceeds a preset delay threshold; and the number of terminals using the shared resources exceeds a preset number threshold.

7. The method according to claim 1, wherein
when the shared resources contain the temporary resources, before the temporary resources are not activated by the base station or after the temporary resources are deactivated, the base station allows other terminals in the cell to use the temporary resources;
when the shared resources do not contain the temporary resources, the base station allows the terminals requiring low delay transmission to use the shared resources to send the uplink data, and does not allow other terminals in the cell to use the shared resources.

8. The method according to claim 1, wherein configuring, by the base station, the at least two terminals to transmit the uplink data without grant on the shared resources comprise:
configuring the terminals requiring low delay transmission in the at least two terminals to use part or all of the shared resources to send the uplink data; or
in the case that the at least two terminals comprise a first set of terminals and a second set of terminals, configuring terminals in the first set of terminals to use the temporary resources to send the uplink data and terminals in the second set of terminals to use the shared resources, which do not contain the temporary resources, to send the uplink data.

9. The method according to claim 8, wherein configuring the terminals requiring low delay transmission in the at least two terminals to use part of the shared resources to send the uplink data comprises:
configuring the terminals requiring low delay transmission in the at least two terminals to use one of N portions obtained by dividing the shared resources to send the uplink data, wherein N is a positive integer number.

10. The method according to claim 1, further comprising:
detecting, by the base station, the received uplink data carried by the shared resources; and
if detecting that the conflicts occur in the uplink data carried by the shared resources, completing, by the base station, management by any one of:
1) allocating, by the bast station, dedicated resources to the at least two terminals and configuring the at least two terminals to use the allocated dedicated resources to transmit the uplink data;
2) increasing, by the bast station, the size of the shared resources and configuring the at least two terminals to use the increased shared resources to transmit the uplink data;
3) decreasing, by the bast station, the size of the shared resources and configuring the at least two terminals to use the decreased shared resources to transmit the uplink data;
4) in the case that the at least two terminals comprise a third set of terminals and a fourth set of terminals, allocating, by the bast station, dedicated resources to terminals in the third set of terminals and configuring the terminals in the third set of terminals to use the allocated dedicated resources to transmit the uplink data, and increasing, by the bast station, the size of the shared resources and configuring the terminals in the fourth set of terminals to use the increased shared resources to transmit the uplink data; and
5) in the case that the at least two terminals comprise a fifth set of terminals and a sixth set of terminals, allocating, by the bast station, dedicated resources to terminals in the fifth set of terminals and configuring the terminals in the fifth set of terminals to use the allocated dedicated resources to transmit the uplink data, and decreasing the size of the shared resources and configuring the terminals in the sixth set of terminals to use the decreased shared resources to transmit the uplink data.

11. The method according to claim 1, wherein the shared resources are located at one side of system bandwidth at which frequencies are lower than a center frequency or at one side of the system bandwidth at which frequencies are higher than the center frequency or at two sides of the system bandwidth or at a center of the system bandwidth.

12. The method according to claim 3, wherein the temporary resources are not larger than original shared resources and do not overlap with the original shared resources, the temporary resources being located at one side of the system bandwidth at which the frequencies are lower than the center frequency or at one side of the system bandwidth at which the frequencies are higher than the center frequency or at two sides of the system bandwidth or at the center of the system bandwidth.

13. A method of transmitting and controlling uplink data comprising:
obtaining, by terminals, shared resources for transmitting the uplink data allocated by a base station to at least two terminals in a cell; and
using, by the terminals, the shared resources to transmit the uplink data without grant.

14. The method according to claim 13, wherein using, by the terminals, the shared resources to transmit the uplink data without grant comprises:
when the shared resources contain temporary resources, before the temporary resources are not activated or after usage limited time is exceeded after activation of the temporary resources, using, by terminals requiring low delay transmission, only the shared resources except the temporary resources to send the uplink data.

15. The method according to claim 13, wherein using, by the terminals, the shared resources to transmit the uplink data without grant comprises:
using, by terminals requiring low delay transmission, the shared resources to send the uplink data, and selecting resource units in the shared resources to be occupied according to the size of the required transmitted data, or selecting all of the shared resources to be occupied.

16. The method according to claim 13, wherein using, by the terminals, the shared resources to transmit the uplink data without grant comprises:
selecting, by the terminals, one of N portions obtained by dividing the shared resource according to identification information of the terminals and using the selected shared resources to transmit the uplink data without grant.

17. The method according to claim 16, wherein the identification information of the terminals comprises a user equipment identifier (UE-ID) or a cell radio network temporary identifier (C-RNTI).

18. An apparatus of transmitting and controlling uplink data comprising:
an allocation module configured to allocate shared resources for transmitting the uplink data for at least two terminals in a cell; and
a configuration module configured to configure the at least two terminals to transmit the uplink data without grant on the shared resources.

19. The apparatus according to claim 18, wherein the at least two terminals comprise terminals requiring low delay transmission.

20. The apparatus according to claim 18, wherein the shared resources contain temporary resources.

21. The apparatus according to claim 20, further comprising:
a deactivation module configured to control deactivation of the temporary resources by causing using time of the temporary resources to exceed preset usage limited time or using a physical layer signaling or upper layer signaling to deactivate the temporary resources.

22. The apparatus according to claim 20, wherein the apparatus further comprises:
a first detection module configured to detect the received uplink data carried by the shared resources; and
an activation module configured to, if detecting that conflicts occur in the uplink data carried by the shared resources, use the physical layer signaling to activate the temporary resources in the shared resources on the premise that a preset judgement condition is satisfied.

23. The apparatus according to claim 22, wherein the judgement condition comprises any one of the following conditions: a ratio of the shared resources in which the conflicts occur to total shared resources exceeds a preset ratio, and transmission delay exceeds a preset delay threshold; and the number of terminals using the shared resources exceeds a preset number threshold.

24. The apparatus according to claim 18, further comprising:
a first control module configured to, when the shared resources contain the temporary resources, before the temporary resources are not activated by the base station or after the temporary resources are deactivated, allow other terminals in the cell to use the temporary resources; or
a second control module configured to, when the shared resources do not contain the temporary resources, allow all of the terminals requiring low delay transmission to use the shared resources to send the uplink data, and not allow other terminals in the cell to use the shared resources.

25. The apparatus according to claim 18, wherein the configuration module is configured to:
configure the terminals requiring low delay transmission in the at least two terminals to use part or all of the shared resources to send the uplink data; or
divide the at least two terminals into a first set of terminals and a second set of terminals, and configure terminals in the first set of terminals to use the temporary resources to send the uplink data and terminals in the second set of terminals to use the shared resources, which do not contain the temporary resources, to send the uplink data.

26. The apparatus according to claim 25, wherein the configuration module is configured to:
configure the terminals requiring low delay transmission in the at least two terminals to use one of N portions obtained by dividing the shared resources to send the uplink data, wherein N is a positive integer number.

27. The apparatus according to claim 18, wherein the apparatus further comprises:
a second detection module configured to detect the received uplink data carried by the shared resources; and
a management module configured to, if detecting that conflicts occur in the uplink data carried by the shared resources, complete management by any one of:
1) allocating dedicated resources to the at least two terminals and configuring the at least two terminals to use the allocated dedicated resources to transmit the uplink data;
2) increasing the size of the shared resources and configuring the at least two terminals to use the increased shared resources to transmit the uplink data;
3) decreasing the size of the shared resources and configuring the at least two terminals to use the decreased shared resources to transmit the uplink data;
4) dividing the at least two terminals into a third set of terminals and a fourth set of terminals, allocating dedicated resources to terminals in the third set of terminals and configuring the terminals in the third set of terminals to use the allocated dedicated resources to transmit the uplink data, and increasing the size of the shared resources and configuring the terminals in the fourth set of terminals to use the increased shared resources to transmit the uplink data; and
5) dividing the at least two terminals into a fifth set of terminals and a sixth set of terminals, allocating dedicated resources to terminals in the fifth set of terminals and configuring the terminals in the fifth set of terminals to use the allocated dedicated resources to transmit the uplink data, and decreasing the size of the shared resources and configuring the terminals in the sixth set of terminals to use the decreased shared resources to transmit the uplink data.

28. The apparatus according to claim 18, wherein the shared resources are located at one side of system bandwidth at which frequencies are lower than a center frequency or at one side of the system bandwidth at which frequencies are higher than the center frequency or at two sides of the system bandwidth or at a center of the system bandwidth.

29. The apparatus according to claim 20, wherein the temporary resources are not larger than original shared resources and do not overlap with the original shared resources, the temporary resources being located at one side of the system bandwidth at which the frequencies are lower than the center frequency or at one side of the system bandwidth at which the frequencies are higher than the center frequency or at two sides of the system bandwidth or at the center of the system bandwidth.

30. An apparatus of transmitting and controlling uplink data comprises:
an obtaining module configured to obtain shared resources for transmitting the uplink data allocated by a base station to at least two terminals in a cell; and
a transmission module configured to use the shared resources to transmit the uplink data without grant.

31. The apparatus according to claim 30, wherein the transmission module is configured to,
when the shared resources contain temporary resources, before the temporary resources are not activated or after usage limited time is exceeded after activation of the temporary resources, use only the shared resources except the temporary resources to send the uplink data.

32. The apparatus according to claim 30, wherein the transmission module is configured to:
use the shared resources to send the uplink data, and select resource units in the shared resources to be occupied according to the size of the required transmitted data, or select all of the shared resources to be occupied.

33. The apparatus according to claim 30, wherein the transmission module is configured to:
select one of N portions divided in the shared resources according to identification information of the terminals and use the selected shared resources to transmit the uplink data without grant.

34. The apparatus according to claim 33, wherein the identification information of the terminals comprises a user equipment identifier (UE-ID) or a cell radio network temporary identifier (C-RNTI).
